(19)

**Europäisches Patentamt**
**European Patent Office**
**Office européen des brevets**

(11) **EP 4 745 748 A1**

(12) **EUROPEAN PATENT APPLICATION**
published in accordance with Art. 153(4) EPC

(43) Date of publication:
**20.05.2026 Bulletin 2026/21**

(21) Application number: **23945807.8**

(22) Date of filing: **14.07.2023**

(51) International Patent Classification (IPC):
*G06F 3/06* (2006.01)

(52) Cooperative Patent Classification (CPC):
**G06F 3/06**

(86) International application number:
**PCT/JP2023/026129**

(87) International publication number:
**WO 2025/017802 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Astemo, Ltd.**
**Chiyoda-ku,**
**Tokyo 1000004 (JP)**

(72) Inventors:
• **NAKAGAWA, Yu**
**Hitachinaka-shi, Ibaraki 312-8503 (JP)**

• **NOKAIDO, Takaaki**
**Hitachinaka-shi, Ibaraki 312-8503 (JP)**
• **SAKAMOTO, Hideyuki**
**Hitachinaka-shi, Ibaraki 312-8503 (JP)**
• **IKEDA, Yasuhiro**
**Hitachinaka-shi, Ibaraki 312-8503 (JP)**
• **SOBUE, Tsuneo**
**Hitachinaka-shi, Ibaraki 312-8503 (JP)**

(74) Representative: **MERH-IP Matias Erny Reichl
Hoffmann
Patentanwälte PartG mbB
Paul-Heyse-Straße 29
80336 München (DE)**

(54) **DATA RECORDING METHOD FOR CONTROL SYSTEM AND ELECTRONIC CONTROL DEVICE**

(57) A data recording method of a control system (1) including a plurality of electronic control units (2A and 2B) each including at least one of a plurality of processors (3A and 3B) and at least one of a plurality of nonvolatile storage devices (4A and 4B) includes: computing remaining lifetimes (LA and LB) of the plurality of nonvolatile storage devices based on data related to usage statuses of the plurality of nonvolatile storage devices; selecting one nonvolatile storage device from among the plurality of nonvolatile storage devices based on the computed remaining lifetimes of the plurality of nonvolatile storage devices; and recording pieces of data acquired by the plurality of electronic control units in the selected one nonvolatile storage device.

[FIG. 2]

**Description**

Technical Field

The present invention relates to a data recording method of a control system and an electronic control unit.

Background Art

JP 2013-84284 A (PTL 1) discloses a technology in which in a control system including a plurality of electronic control units (hereinafter, also referred to as ECUs), data of a first ECU (own device) is recorded in a recording device (storage device) of a second ECU (another device).

The literature discloses that, in an electronic control system including three or more electronic control units connected to one another so as to be able to perform data communication, in a case where one of the electronic control units detects an abnormality, it is determined whether or not data recording can be performed on the one electronic control unit, in a case where it is determined that the data recording can be performed on the one electronic control unit, predetermined data is recorded in the one electronic control unit, and in a case where it is determined that the data recording cannot be performed on the one electronic control unit, the predetermined data is transmitted to and recorded in any one of other electronic control units on which recording can be performed instead of the one electronic control unit.

Citation List

Patent Literature

PTL 1: JP 2013-84284 A

Summary of Invention

Technical Problem

In many of recent electronic control units, a nonvolatile memory (nonvolatile storage device) is mounted as a storage device (recording device) of the electronic control unit. The lifetime of the nonvolatile memory may vary depending on a usage status (for example, the number of write operations).

In the system of PTL 1, an electronic control unit that is a data recording destination (that is, a recording device included in the electronic control unit) is changed according to whether or not data recording can be performed on the electronic control unit at the time of abnormality detection, but a usage status of each recording device is not considered in selection of the recording device that is the data recording destination. Therefore, in a case where the recording device of each electronic control unit is the nonvolatile memory, if the write operations are concentrated on one of the nonvolatile memories, the lifetime of the nonvolatile memory becomes shorter than the other nonvolatile memories, and as a result, there is a possibility that the lifetime of the system is shortened due to the shortened lifetime of the memory.

Such a problem is not limited to a system including a plurality of electronic control units, and is also applied to a single electronic control unit incorporating a plurality of storage devices (nonvolatile memories).

The present invention has been made in view of the above matters, and an object of the present invention is to provide a data recording method considering a lifetime of each storage device in a control system, and an electronic control unit.

Solution to Problem

The present application includes a plurality of means for solving the above problem. As an example, a data recording method of a control system including a plurality of electronic control units each including at least one of a plurality of processors and at least one of a plurality of nonvolatile storage devices includes: computing remaining lifetimes of the plurality of nonvolatile storage devices based on data related to usage statuses of the plurality of nonvolatile storage devices; selecting one nonvolatile storage device from among the plurality of nonvolatile storage devices based on the computed remaining lifetimes of the plurality of nonvolatile storage devices; and recording pieces of data acquired by the plurality of electronic control units in the selected one nonvolatile storage device.

Advantageous Effects of Invention

According to the present invention, a storage device that is a data recording destination is selected in consideration of the remaining lifetime of each storage device, and thus, it is easy to equalize the remaining lifetimes of the respective storage devices, and it is possible to extend the lifetime of the system. Problems, configurations, and effects other than those described above will be clarified by the following description of the embodiments.

Brief Description of Drawings

[FIG. 1] FIG. 1 is a system configuration diagram illustrating an example of a control system according to a first embodiment of the present invention.

[FIG. 2] FIG. 2 is a flowchart illustrating an example of a procedure of switching processing for nonvolatile storage devices 4A and 4B that are data storage destinations by a usage status monitoring unit 5 (control system 1) according to the first embodiment of the present invention.

[FIG. 3] FIG. 3 is a flowchart illustrating an example of a procedure for storing data in the nonvolatile storage devices 4A and 4B by electronic control units (ECUs) 2A and 2B (control system 1) according to the first embodiment of the present invention.

[FIG. 4] FIG. 4 is an explanatory diagram for describing an effect achieved by the first embodiment.

[FIG. 5] FIG. 5 is a flowchart illustrating an example of a procedure for storing data in nonvolatile storage devices 4A and 4B by ECUs 2A and 2B (control system 1) according to a second embodiment of the present invention.

[FIG. 6] FIG. 6 is a system configuration diagram illustrating an example of a control system according to a third embodiment of the present invention.

[FIG. 7] FIG. 7 is a flowchart illustrating an example of a procedure of switching processing for nonvolatile storage devices 4A and 4B that are data storage destinations by a usage status monitoring unit 5 according to the third embodiment of the present invention.

[FIG. 8] FIG. 8 is a flowchart illustrating an example of a procedure for storing data in the nonvolatile storage devices 4A and 4B by processors 3A and 3B according to the third embodiment of the present invention.

Description of Embodiments

Hereinafter, embodiments of the present invention will be described with reference to the drawings.

<First Embodiment>

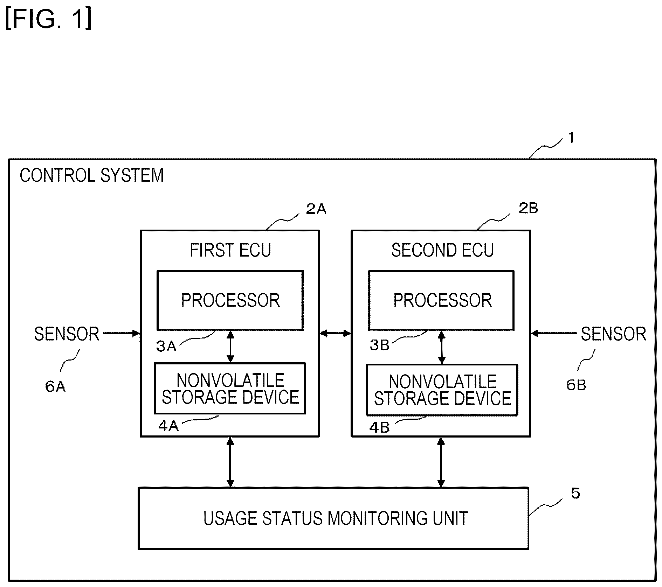

FIG. 1 is a system configuration diagram illustrating an example of a control system according to a first embodiment of the present invention. A control system 1 includes a plurality of electronic control units (ECUs) 2A and 2B (first ECU 2A and second ECU 2B). Each of the plurality of ECUs 2A and 2B includes at least one processor (first processor 3A and second processor 3B) and at least one nonvolatile storage device (first nonvolatile storage device 4A and second nonvolatile storage device 4B). At least one sensor (first sensor 6A and second sensor 6B) is connected to each of the plurality of ECUs 2A and 2B, and data detected by the sensors 6A and 6B is input to the ECUs 2A and 2B that are connection destinations. The plurality of ECUs 2A and 2B are connected to be able to communicate with each other. A usage status monitoring unit 5 is connected to each of the plurality of ECUs 2A and 2B so as to be able to communicate with each other.

The usage status monitoring unit 5 is a unit that manages remaining lifetimes of the respective nonvolatile storage devices 4A and 4B computed based on data (also referred to as usage status data) related to usage statuses of the nonvolatile storage devices 4A and 4B of the connected ECUs (ECUs 2A and 2B), and data stored in the nonvolatile storage devices 4A and 4B (for example, in which nonvolatile storage device the data of the sensor 6A detected in a certain period is stored). The remaining lifetime may be computed by the usage status monitoring unit 5 itself.

As the usage status monitoring unit 5, for example, an ECU other than the two ECUs 2A and 2B or a computer can be used. Although the usage status monitoring unit 5 is illustrated as being separate from the two ECUs 2A and 2B in FIG. 1, the usage status monitoring unit 5 may be stored as a program executed by the processor (for example, the processor 3A) of one ECU (for example, the ECU 2A) among the two ECUs 2A and 2B in the nonvolatile storage device (for example, the nonvolatile storage device 4A). That is, any one of the connected ECUs 2A and 2B may function as the usage status monitoring unit 5. Further, the usage status monitoring unit 5 may be an interface or a communication device for inputting necessary data (that is, the remaining lifetimes of the nonvolatile storage devices 4A and 4B and contents of the stored data) from the outside.

The data related to the usage statuses of the two nonvolatile storage devices 4A and 4B, which is used for the computation of the remaining lifetimes, includes at least one of a cumulative write amount of each of the two nonvolatile storage devices 4A and 4B and the cumulative number of write operations of each of the two nonvolatile storage devices 4A and 4B. In addition, the data related to the usage statuses may further include at least one of temperature data of each of the ECUs 2A and 2B and data (for example, the number of alternative sectors) regarding an alternative sectors in the two nonvolatile storage devices 4A and 4B. The alternative sector refers to a sector allocated instead of a defective sector in a case where there is a defective sector in the nonvolatile storage device. The computation of the remaining lifetimes of the nonvolatile storage devices is described below.

The maximum number of write operations, the maximum write amount, and a data-retention endurance period are determined in advance as the lifetime of each of the nonvolatile storage devices 4A and 4B, and can be changed depending on a use environment temperature (that is, an ECU temperature) and the number of alternative sectors.

The control system 1 can be applied to an in-vehicle system mounted on a vehicle. Here, an example in which the control system 1 is an in-vehicle system including two ECUs 2A and 2B as illustrated in FIG. 1 will be described.

The control system 1 can function as an event data recorder (hereinafter referred to as EDR) that records data when an accident or an event occurs, or a data recording device (data storage system for automated driving; hereinafter referred to as DSSAD) that records a series of data during an automated driving sequence. The data recorded in the EDR or the DSSAD includes sensor data acquired by the sensor, a vehicle speed, a time, steering data (for example, a steering angle), and the like.

Information regarding an interior and exterior of the vehicle, which is acquired by the sensors 6A and 6B, is input from the sensors 6A and 6B to the ECUs 2A and 2B. The information regarding the interior and exterior of the vehicle includes image data of the surroundings of the vehicle captured by an image sensor (camera), point cloud data of an obstacle around the vehicle, which is acquired by a LiDAR, radar, or the like, object data, and the like. Types of the sensor 6A and the sensor 6B can be different from each other.

The ECU 2A in the control system 1 includes at least one processor 3A among the plurality of processors 3A and 3B and at least one nonvolatile storage device 4A among the plurality of nonvolatile storage devices 4A and 4B, and the ECU 2B in the control system 1 includes at least one processor 3B among the plurality of processors 3A and 3B and at least one nonvolatile storage device 4B among the plurality of nonvolatile storage devices 4A and 4B, the plurality of processors 3A and 3B and the plurality of nonvolatile storage devices 4A and 4B being mounted on the control system 1.

The processors 3A and 3B execute fusion processing of external recognition devices such as a camera, a radar, and a LiDAR, recognition processing, image compression processing, sensor information processing, vehicle control processing, and the like by using outputs of the sensors 6A and 6B. A multi-core processor may be used as each of the processors 3A and 3B.

The nonvolatile storage devices 4A and 4B are storage devices having rewritable nonvolatile storage areas, and are, for example, electrically erasable programmable read only memories (EEPROMs) or flash memories. The nonvolatile storage device 4A is communicably connected to the processor 3A, and the nonvolatile storage device 4B is communicably connected to the processor 3B.

Writing and reading of data to and from the nonvolatile storage devices 4A and 4B are controlled by the processors 3A and 3B. The nonvolatile storage devices 4A and 4B store EDR data, DSSAD data, map data, program data, the cumulative write amounts of the nonvolatile storage devices 4A and 4B, the cumulative numbers of write operations of the nonvolatile storage devices 4A and 4B, cumulative temperature information of the ECUs 2A and 2B, the data regarding the alternative sectors of the nonvolatile storage devices 4A and 4B, and the like. The EDR data and the DSSAD data include the information regarding the interior and exterior of the vehicle, which is obtained by processing the data of the sensors 6A and 6B by the processors 3A and 3B, an event occurrence time, version information of each data, identification information of the ECUs 3A and 3B that are processing sources of the respective pieces of data, and the like. By using the identification information of the ECUs 3A and 3B that are the processing sources of the respective pieces of data, for example, which ECU has processed the data can be quickly specified when the EDR data and the DSSAD data are uploaded to an external center or the like. Different pieces of program data can be stored in the nonvolatile storage devices 4A and 4B, respectively.

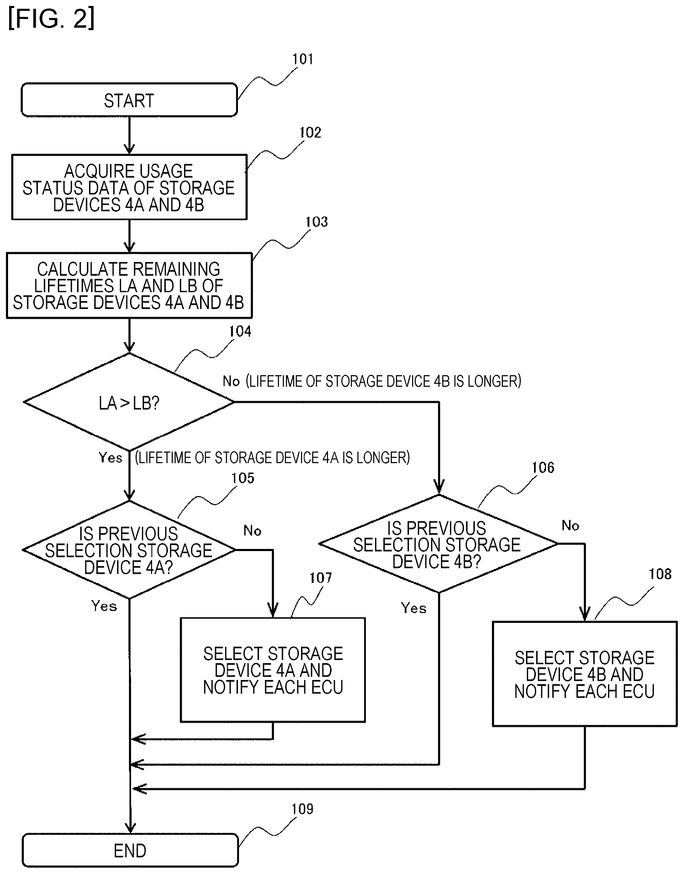

FIG. 2 is a flowchart illustrating an example of a procedure of switching processing for the nonvolatile storage devices 4A and 4B that are the data storage destinations by the usage status monitoring unit 5 (control system 1) according to the first embodiment of the present invention.

The usage status monitoring unit 5 (control system 1) starts the flowchart of FIG. 2 at a predetermined timing (step 101), and proceeds to step 102.

In an initial setting at the time of system activation, it is preferable to select one of the nonvolatile storage devices 4A and 4B in which data of each of the ECUs 2A and 2B is to be stored. Here, the description will be given assuming that each of the ECUs 2A and 2B is set to store the data of the sensors 6A and 6B in the nonvolatile storage device 4A of the ECU 2A.

In step 102, the usage status monitoring unit 5 acquires the data related to the usage statuses of the plurality of nonvolatile storage devices 4A and 4B in the plurality of ECUs 2A and 2B included in the control system 1. Specifically, the usage status monitoring unit 5 acquires the cumulative write amount of the data in each of the two nonvolatile storage devices 4A and 4B, the cumulative number of write operations for the data, the temperature information of the ECUs 2A and 2B, the information regarding the alternative sectors, and the like.

In step 103, the usage status monitoring unit 5 calculates a remaining lifetime L of each of the nonvolatile storage devices 4A and 4B from which the data related to the usage statuses has been acquired, based on the data related to the usage statuses acquired in step 102.

A method of calculating the remaining lifetime L of the nonvolatile storage device in the present embodiment is described below. Here, it is assumed that the nonvolatile storage devices 4A and 4B are the same as each other in order to simplify the description.

(Remaining Lifetime Lt Based on Number of Write Operations)

First, computation of a remaining lifetime Lt [year] of each of the nonvolatile storage devices 4A and 4B based on the number of write operations will be described. Prior to the computation of the remaining lifetimes Lt, first, the usage status monitoring unit 5 acquires cumulative temperature data of the ECUs 2A and 2B, calculates an average value of operating temperatures (ambient temperatures) of the nonvolatile storage devices 4A and 4B to date from the temperature data, and calculates the maximum number of write operations set in advance for the average value. For example, the maximum number of write operations is set to 5 million if the average value of the temperatures is 25°C, and is set to 500,000 if the average value of the temperatures is 85°C.

Assuming that the maximum number of write operations of each of the nonvolatile storage devices 4A and 4B when used in an environment of n°C is Tmn, the cumulative number of write operations of each of the nonvolatile storage devices 4A and 4B from the start of use is T1, and the average number of write operations per year of each of the nonvolatile storage devices 4A and 4B is T2, the remaining lifetime Lt [year] of each of the nonvolatile storage devices 4A and 4B based on the number of write operations is obtained by the following Formula (1). T2 may be computed by dividing T1 by the number of years of use of the nonvolatile storage device.

$$Lt = (Tmn - T1)/T2 \ldots\ldots \text{Formula (1)}$$

For example, in a case where the maximum number Tm25 of write operations when used in an environment of 25°C = 5 million, the cumulative number T1 of write operations = 500,000, and the average number T2 of write operations per year = 500,000, the remaining lifetime Lt is nine years. Further, in a case where the maximum number Tm80 of write operations when used in an environment of 85°C is 1 million, the cumulative number T1 of write operations is 500,000, and the average number T2 of write operations per year is 500,000, the remaining lifetime Lt is one year.

(Remaining Lifetime Lc Based on Write Amount)

Next, computation of a remaining lifetime Lc [year] of each of the nonvolatile storage devices 4A and 4B based on the write amount will be described. Assuming that a predetermined maximum write amount of each of the nonvolatile storage devices 4A and 4B is Cm [terabyte (hereinafter referred to as TB)], a cumulative write amount of each of the nonvolatile storage devices 4A and 4B from the start of use is C1 [TB], and an average write amount per year of each of the nonvolatile storage devices 4A and 4B is C2 [TB/year], the usage status monitoring unit 5 obtains the remaining lifetime Lc [year] of each of the nonvolatile storage devices 4A and 4B based on the write amount by the following Formula (2). C2 may be computed by dividing C1 by the number of years of use of the nonvolatile storage device.

$$Lc = (Cm - C1)/C2 \ldots\ldots \text{Formula (2)}$$

For example, in a case where the maximum write amount Cm = 100 TB, the cumulative write amount C1 to date = 20 TB, and the average write amount C2 per year = 20 TB, the remaining lifetime Lc is four years.

Note that the calculation of the remaining lifetimes Lt and Lc by Formulas (1) and (2) is merely an example, and other calculation methods may be used. For example, the remaining lifetime may be calculated in consideration of the information regarding the alternative sectors, or the remaining lifetime may be calculated by comprehensively determining the number of write operations and the write amount.

(Remaining Lifetime L)

The computation of the remaining lifetime L by the usage status monitoring unit 5 is performed for all the nonvolatile storage devices included in the control system 1. Then, in a case where a plurality of computation methods are set (the methods exemplified above are two methods using Formulas (1) and (2)), the remaining lifetime is computed for each nonvolatile storage device according to all the methods. That is, in the present embodiment, two remaining lifetimes Lt and Lc are computed for the nonvolatile storage device 4A, and two remaining lifetimes Lt and Lc are computed for the nonvolatile storage device 4B. For each of the nonvolatile storage devices 4A and 4B, the smallest one of the plurality of computed remaining lifetimes Lt and Lc is defined as the remaining lifetime L of the corresponding nonvolatile storage device. That is, in the above example, since $Lt = 9 > Lc = 4$ if the operating temperature is 25°C, the remaining lifetime $L = Lc = 4$, and since $Lt = 1 < Lc = 4$ if the operating temperature is 85°C, the remaining lifetime $L = Lt = 1$. Here, the remaining lifetime of the nonvolatile storage device 4A is denoted by LA, and the remaining lifetime of the nonvolatile storage device 4B is denoted by LB.

Here, a plurality of types of remaining lifetimes Lt and Lc are computed, and the smallest one is set as the final remaining lifetime L. However, only one type of remaining lifetime (for example, Lt or Lc) may be computed and set as the final remaining lifetime L.

In step 104, the usage status monitoring unit 5 determines whether or not the remaining lifetime LA of the nonvolatile storage device 4A is longer than the remaining lifetime LB of the nonvolatile storage device 4B. In a case where the remaining lifetime LA is longer than the remaining lifetime LB, the flow proceeds to step 105, and in a case where the remaining lifetime LB is longer than the remaining lifetime LA, the flow proceeds to step 106.

In a case where three or more nonvolatile storage devices are present in the control system 1, the usage status monitoring unit 5 may compare the remaining lifetimes of the respective nonvolatile storage devices calculated in step 103 and execute processing of specifying a nonvolatile storage device that has the longest remaining lifetime..

In step 105, the usage status monitoring unit 5 determines whether or not the previous selection is the nonvolatile storage device 4A, and in a case where the previous selection is the nonvolatile storage device 4A, the usage status monitoring unit 5 maintains the selection as it is and ends the flow (step 109). On the other hand, in a case where the previous selection is the nonvolatile storage device 4B, the usage status monitoring unit 5 selects the nonvolatile storage device 4A in step 107, notifies each of the ECUs 2A and 2B in the control system 1 of the selection of the nonvolatile storage device 4A, and ends the flow (step 109).

In step 106, the usage status monitoring unit 5 determines whether or not the previous selection is the nonvolatile storage device 4B, and in a case where the previous selection is the nonvolatile storage device 4B, the usage status monitoring unit 5 maintains the selection as it is and ends the flow (step 109). On the other hand, in a case where the previous selection is the nonvolatile storage device 4A, the usage status monitoring unit 5 selects the nonvolatile storage device 4B in step 108, notifies each of the ECUs 2A and 2B in the control system 1 of the selection of the nonvolatile storage device 4B, and ends the flow (step 109).

The "predetermined timing" for starting the flow of FIG. 2 may be any timing between the activation and the termination of the ECUs 2A and 2B, and the flow of FIG. 2 can be started even during traveling of the vehicle. Therefore, the flow of FIG. 2 may be started at a predetermined cycle, for example. However, considering that the data is uploaded from the control system 1 (nonvolatile storage devices 4A and 4B) to the external center or the like and is analyzed, it is preferable to start the flow when an ignition of the vehicle on which the control system 1 is mounted or a power supply of the ECU is turned on. A condition that the flow is started when the ignition or the power supply of the ECU is turned on may be applied only once per day. In this case, there is a high possibility that the data storage destination is changed for each date, and thus, it is easy to determine in which nonvolatile storage device 4 of the ECU stores the data. Here, a timing for selecting one nonvolatile storage device as the data storage destination is controlled by changing the timing for starting the flow of FIG. 2, but for example, the storage device 4 that is the storage destination may be changed by holding (suspending) the execution of steps 107 and 108 until the "predetermined timing" is reached. For example, in a case where a negative determination (No) is made in step 105 or 106, the execution of the processing of step 107 or step 108 may be held until the ignition is turned on as the "predetermined timing", and the execution of the processing of step 107 or step 108, that is, the selection and notification of the nonvolatile storage device, may be performed when the ignition is turned on.

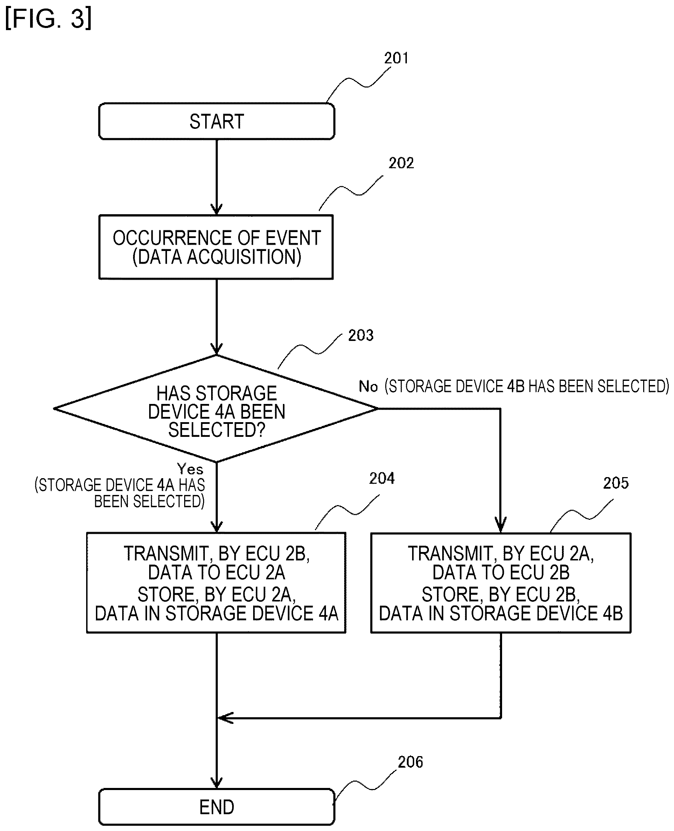

Next, a procedure for storing the data in the nonvolatile storage device selected in the flow of FIG. 2 by each of the ECUs 2A and 2B will be described with reference to FIG. 3. FIG. 3 is a flowchart illustrating an example of a procedure for storing the data in the nonvolatile storage devices 4A and 4B by the ECUs 2A and 2B (control system 1) according to the first embodiment of the present invention.

The control system 1 (ECU 2A and ECU 2B) starts the flowchart of FIG. 3 at a predetermined cycle (step 201), and proceeds to step 202.

In step 202, the control system 1 monitors whether or not an event (for example, a collision of an automobile) requiring data storage in the EDR or the DSSAD occurs, and when the event occurs, each of the ECUs 2A and 2B (processors 3A and 3B) acquires the data (EDR data or DSSAD data) for a predetermined period before and after the occurrence of the event. At this time, each of the ECUs 2A and 2B (processors 3A and 3B) may process the acquired data as necessary, and the processed data may be added to the data (EDR data or DSSAD data) to be stored in steps 204 and 205.

In step 203, each of the ECUs 2A and 2B (processors 3A and 3B) confirms which nonvolatile storage device has been selected in the flow of FIG. 2. In the illustrated example, it is determined whether or not the selected nonvolatile storage device is the nonvolatile storage device 4A, and in a case where the nonvolatile storage device 4A has been selected, the processing proceeds to step 204, and in a case where the nonvolatile storage device 4B has been selected, the processing proceeds to step 205.

In step 204, the ECU 2B transmits the EDR data and the DSSAD data acquired and processed by the processor 3B to the ECU 2A. The ECU 2A stores the EDR data and the DSSAD data acquired and processed by the processor 3A and the data transmitted from the ECU 2B in the nonvolatile storage device 4A, and ends the processing (step 206). That is, in step S204, the data acquired by the remaining ECU 2B after excluding the ECU 2A from the plurality of ECUs 2A and 2B is transmitted to the ECU 2A on which the selected one nonvolatile storage device 4A is mounted, and the data acquired by the ECU 2A and the data transmitted from the remaining ECU 2B are recorded in one nonvolatile storage device 4A. As a result, all the pieces of data acquired by the plurality of ECUs 2A and 2B in the control system 1 are recorded in one nonvolatile storage device 4A.

In step 205, the ECU 2A transmits the EDR data and the DSSAD data acquired and processed by the processor 3A to the ECU 2B. The ECU 2B stores the EDR data and the DSSAD data acquired and processed by the processor 3B and the data transmitted from the ECU 2A in the nonvolatile storage device 4B, and ends the processing (step 206). That is, in step 205, the data acquired by the remaining ECU 2A after excluding the ECU 2B from the plurality of ECUs 2A and 2B is transmitted to the ECU 2B on which the selected one nonvolatile storage device 4B is mounted, and the data acquired by the ECU 2B and the data transmitted from the remaining ECU 2A are recorded in one nonvolatile storage device 4B. As a result, all the pieces of data acquired by the plurality of ECUs 2A and 2B in the control system 1 are recorded in one nonvolatile storage device 4B.

(Characteristics of First Embodiment)

Characteristics of a data recording method executed by the control system according to the first embodiment are summarized as follows.

(1) The data recording method of the control system 1 including the plurality of ECUs 2A and 2B each including at least one of the plurality of processors 3A and 3B and at least one of the plurality of nonvolatile storage devices 4A and 4B includes: computing the remaining lifetimes LA and LB of the plurality of nonvolatile storage devices 4A and 4B based on the data related to the usage statuses of the plurality of nonvolatile storage devices 4A and 4B; and selecting one nonvolatile storage device from among the plurality of nonvolatile storage devices 4A and 4B based on the computed remaining lifetimes LA and LB of the plurality of nonvolatile storage devices 4A and 4B; and recording the pieces of data acquired by the plurality of ECUs 2A and 2B in the selected one nonvolatile storage device.

As a data recording method of a control system having a function of recording data acquired by a plurality of ECUs, a method in which each ECU records data in a nonvolatile storage device thereof has been conventionally adopted. However, in such a method, for example, there is a concern that the write amount is biased toward the nonvolatile storage device of the ECU that manages relatively large-capacity data such as a camera image, and it is highly likely that the lifetime of the nonvolatile storage device is shorter than other nonvolatile storage devices. On the other hand, in a case where data recording is performed as in the present embodiment, the pieces of data acquired by the plurality of ECUs 2A and 2B are recorded in one nonvolatile storage device selected based on the remaining lifetimes LA and LB. That is, a storage device that is the data recording destination is selected in consideration of the remaining lifetimes LA and LB of the storage devices 4A and 4B, and thus, it is easy to equalize the remaining lifetimes of the storage devices, and it is possible to extend the lifetime of the system.

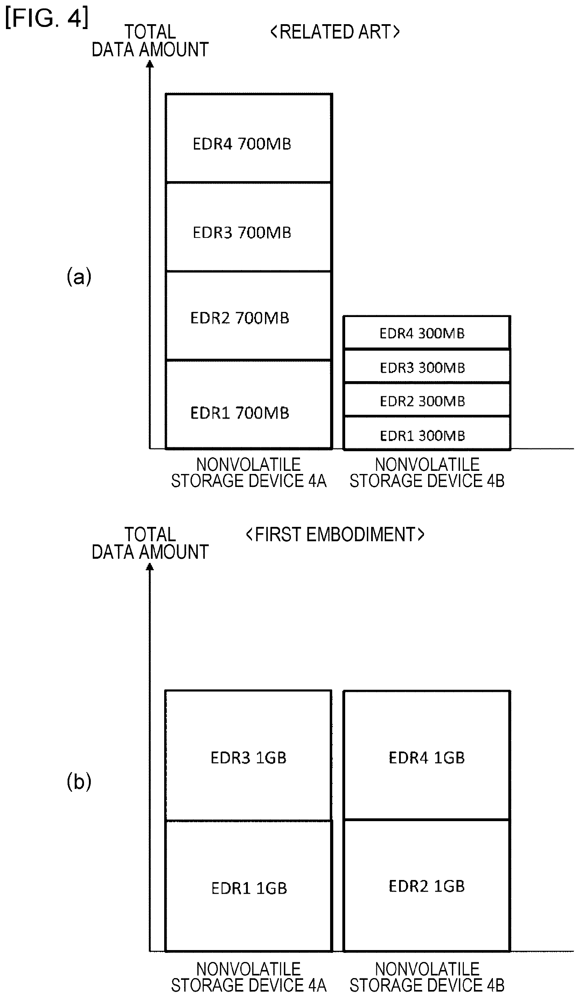

The effect of the present embodiment will be further described with reference to FIG. 4. FIG. 4 is an explanatory diagram for describing the effect achieved by the present embodiment. In the example of the figure, it is assumed that the ECU 2A records the EDR data of 700 MB and the ECU 2B records the EDR data of 300 MB for one event occurrence, and it is assumed that four events (EDR1, EDR2, EDR3, and EDR4) have occurred. Part (a) positioned on the upper side of FIG. 4 illustrates data capacities of the two nonvolatile storage devices 4A and 4B in a case where a conventional method of recording own data in the ECUs 2A and 2B is adopted, and part (b) positioned on the lower side of FIG. 4 illustrates data capacities of the two nonvolatile storage devices 4A and 4B in a case where the method of the present embodiment is adopted for data recording.

In a case where the conventional method of part (a) is used, after the occurrence of four events, data of 700 MB $\times$ 4 times = 2.8 GB is written to the nonvolatile storage device 4A, and data of 300 MB $\times$ 4 times = 1.2 GB is written to the nonvolatile storage device 4B. That is, the data recording is concentrated on the nonvolatile storage device 4A.

On the other hand, in a case where the method of the present embodiment of (b) is used, the nonvolatile storage device 4A is selected when the first event occurs, and data of 700 MB from the ECU 2A and data of 300 MB from the ECU 2B, that is, the pieces of data of 1 GB in total, are written to the storage device 4A. When the next second event occurs, the nonvolatile storage device 4B having a relatively smaller write capacity is selected, and the pieces of data of 1 GB in total from the two ECUs 2A and 2B are written to the storage device 4B similarly to the first event. When the third event occurs, the nonvolatile storage device 4A is selected, and the pieces of data of 1 GB in total from the two ECUs 2A and 2B are similarly written to the storage device 4A. When the fourth event occurs, the nonvolatile storage device 4B having a relatively smaller write capacity is selected, and the pieces of data of 1 GB in total from the two ECUs 2A and 2B are similarly written to the storage device 4B. That is, after the occurrence of four events, the data of 2 GB is written to the nonvolatile storage device 4A, and the data of 2 GB is also written to the nonvolatile storage device 4B.

As described above, according to the present embodiment, uneven data storage between the two nonvolatile storage devices 4A and 4B is suppressed, and the remaining lifetimes of the respective storage devices 4A and 4B are equalized. As a result, the lifetime of the system can be extended.

(2) In the above (1), the data related to the usage statuses of the plurality of nonvolatile storage devices 4A and 4B preferably includes at least one of the cumulative write amount of each of the plurality of nonvolatile storage devices 4A and 4B and the cumulative number of write operations of each of the plurality of nonvolatile storage devices 4A and 4B.

Since the lifetime of each of the nonvolatile storage devices 4A and 4B is defined by the maximum write amount and the maximum number of write operations, when the remaining lifetime is computed using the cumulative write amount and the cumulative number of write operations of each of the storage devices 4A and 4B, the remaining lifetime of each of the storage devices 4A and 4B can be computed with high accuracy based on each of the cumulative write amount and the cumulative number of write operations.

(3) In the above (1) or (2), the data related to the usage statuses of the plurality of nonvolatile storage devices 4A and 4B preferably further includes at least one of the temperature data of the plurality of ECUs 2A and 2B and the data regarding the alternative sectors in the plurality of nonvolatile storage devices 4A and 4B.

Since the lifetimes of the nonvolatile storage devices 4A and 4B can vary depending on the temperature data of the ECU and the number of alternative sectors, the remaining lifetimes of the storage devices 4A and 4B can be computed more accurately in consideration of such pieces of information.

(4) In any one of the above (1) to (3), the selected one nonvolatile storage device is preferably a nonvolatile storage device having the longest computed remaining lifetime LA or LB among the plurality of nonvolatile storage devices 4A and 4B.

When the storage device is selected in this manner, the number of write operations and the write capacity of the storage device having the longest remaining lifetime are preferentially increased, so that the remaining lifetimes of the respective storage devices can be easily equalized, and the lifetime of the system can be extended.

(5) In any one of the above (1) to (4), the selection of the one nonvolatile storage device is preferably performed at a predetermined timing.

When the storage device is selected in this manner, the storage device is selected each time in consideration of the remaining lifetime of each storage device, so that it is easier to equalize the remaining lifetimes of the respective storage devices.

(6) The predetermined timing in the above (5) is preferably a timing at which the ignition of the vehicle on which the control system is mounted is turned on.

When the predetermined timing is determined in this manner, the storage device to be used for data recording is selected at the start of use of the vehicle. Therefore, data management is facilitated, and efficiency of upload work to the center or the like can be improved.

<Second Embodiment>

The present embodiment is different from the first embodiment in a flow in which each of ECUs 2A and 2B stores data, and other configurations, that is, a hardware configuration of FIG. 1 and a flowchart regarding selection of a nonvolatile storage device of FIG. 2 are the same as those of the first embodiment. Here, differences from the first embodiment will be described.

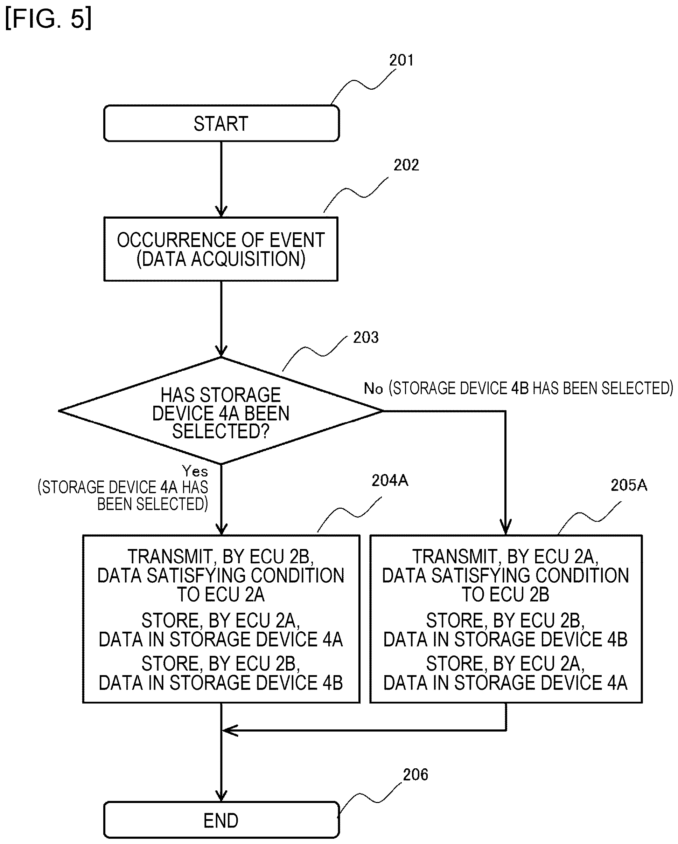

FIG. 5 is a flowchart illustrating an example of a procedure for storing the data in nonvolatile storage devices 4A and 4B by the ECUs 2A and 2B (control system 1) according to the second embodiment of the present invention. Steps 204A and 205A are added instead of steps 204 and 205 in FIG. 3, and other steps are the same as those in FIG. 3. Hereinafter, description of the same steps as those in FIG. 3 will be omitted, and only description of steps 204A and 205A will be made.

In step 204A, the ECU 2B transmits, to the ECU 2A, some pieces of data among EDR data and DSSAD data acquired and processed by a processor 3B, the some pieces of data satisfying a predetermined condition. The ECU 2A stores EDR data and DSSAD data acquired and processed by a processor 3A and the data transmitted from the ECU 2B in the nonvolatile storage device 4A, and the ECU 2B stores the remaining data after excluding the some pieces of data transmitted to the ECU 2A from the EDR data and the DSSAD data acquired and processed by the processor 3B in the nonvolatile storage device 4B, and ends the processing (step 206). Examples of the "predetermined condition" include a condition that a data amount is smaller than a predetermined threshold, a condition that the data amount is larger than the predetermined threshold, and a condition that the data is of a predetermined type (for example, image data). That is, in step S204A, data satisfying the predetermined condition among pieces of data acquired by the remaining ECU (ECU 2B) after excluding the ECU 2A from the plurality of ECUs 2A and 2B is transmitted to the ECU 2A on which the selected one nonvolatile storage device 4A is mounted, and the data acquired by the ECU 2A and the data satisfying the predetermined condition among the pieces of data acquired by the "remaining ECU" are recorded in one nonvolatile storage device 4A, and data that does not satisfy the predetermined condition among the pieces of data acquired by the "remaining ECU" is recorded in the nonvolatile storage device of the "remaining ECU". As a result, the data acquired by the ECU 2A in the control system 1 and some pieces of data satisfying the predetermined condition among the pieces of data acquired by the ECU 2B in the control system 1 are recorded in one nonvolatile storage device 4A, and the remaining data that does not satisfy the predetermined condition among the pieces of data acquired by the ECU 2B is recorded in the nonvolatile storage device 4B.

In step 205, the ECU 2A transmits, to the ECU 2B, some pieces of data among the EDR data and the DSSAD data acquired and processed by the processor 3A and satisfying the predetermined condition. The ECU 2B stores the EDR data and the DSSAD data acquired and processed by the processor 3B and the data transmitted from the ECU 2A in the nonvolatile storage device 4B, and the ECU 2B stores the remaining data after excluding the some pieces of data transmitted to the ECU 2A from the EDR data and the DSSAD data acquired and processed by the processor 3B in the nonvolatile storage device 4B, and ends the processing (step 206). As the "predetermined condition", the same condition as that in step 204A can be used. That is, in step 205A, data satisfying the predetermined condition among pieces of data acquired by the remaining ECU (ECU 2A) after excluding the ECU 2B from the plurality of ECUs 2A and 2B is transmitted to the ECU 2B on which the selected one nonvolatile storage device 4B is mounted, and the data acquired by the ECU 2B and the data satisfying the predetermined condition among the pieces of data acquired by the "remaining ECU" are recorded in one nonvolatile storage device 4B, and data that does not satisfy the predetermined condition among the pieces of data acquired by the "remaining ECU" is recorded in the nonvolatile storage device of the "remaining ECU".

As described above, in the present embodiment, when the pieces of data acquired by the plurality of ECUs 2A and 2B are recorded in the selected one nonvolatile storage device (4A or 4B), some pieces of data satisfying the predetermined condition among the pieces of data acquired by the remaining ECU (2B or 2A) after excluding the ECU on which the selected one nonvolatile storage device is mounted from the plurality of ECUs are transmitted to the ECU (2A or 2B) on which the selected one nonvolatile storage device is mounted, and the data acquired by the ECU on which the selected one nonvolatile storage device is mounted and the some pieces of data transmitted from the remaining ECU are recorded in the selected one nonvolatile storage device. As described above, when only some pieces of data satisfying the condition are transmitted and recorded by the remaining ECU, a write amount and the number of write operations of a nonvolatile storage device of a transmission/recording destination can be appropriately controlled according to the condition, so that the remaining lifetime of the nonvolatile storage device that is the transmission/recording destination can be appropriately controlled.

<Third Embodiment>

Next, a third embodiment according to the present invention will be described. The same parts as those in the first and second embodiments described above are denoted by the same reference numerals, and description of the same parts may be omitted as appropriate.

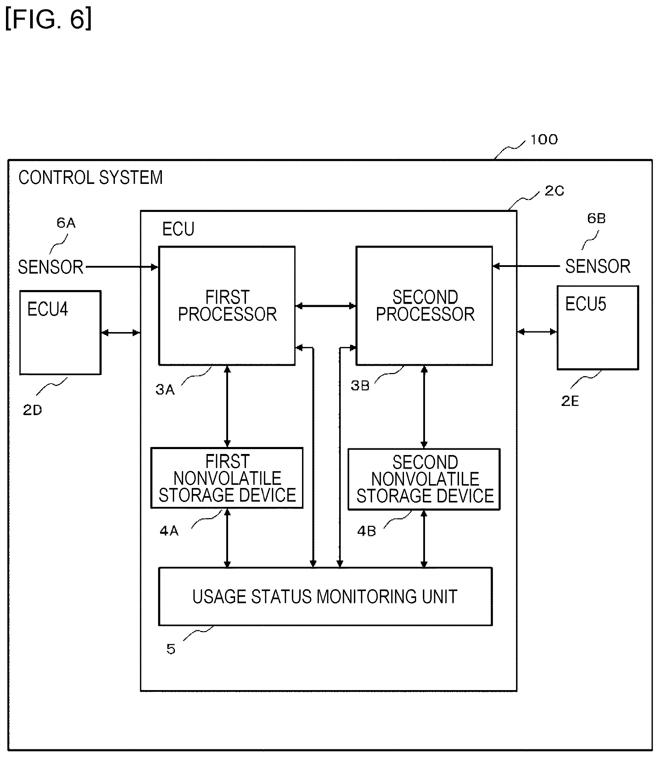

FIG. 6 is a system configuration diagram illustrating an example of a control system according to the third embodiment. A control system 100 illustrated here includes a plurality of ECUs 2C, 2D, and 2E connected so as to be able to communicate with one another. Each of the plurality of ECUs 2C, 2D, and 2E includes at least one processor and at least one nonvolatile storage device.

The ECU 2C includes a plurality of processors 3A and 3B that can communicate with each other and each acquires data, and a plurality of nonvolatile storage devices 4A and 4B in which the pieces of data acquired by the plurality of processors 3A and 3B are recorded. Each processor in the ECU 2C is paired with at least one nonvolatile storage device, and the paired processor can record the data in the corresponding nonvolatile storage device. In the example of FIG. 6, the first processor 3A and the first nonvolatile storage device 4A are paired, and the second processor 3B and the second nonvolatile storage device 4B are paired. Further, a multi-core processor may be used as each of the processors 3A and 3B.

At least one sensor (first sensor 6A and second sensor 6B) is connected to each of the plurality of processors 3A and 3B in the ECU 2C, and data detected by the sensors 6A and 6B (for example, information regarding an interior and exterior of a vehicle) is input to the connected processors 3A and 3B.

A usage status monitoring unit 5 is communicably connected to the plurality of processors 3A and 3B in the ECU 2C and the plurality of nonvolatile storage devices 4A and 4B in the ECU 2C. The usage status monitoring unit 5 computes remaining lifetimes of the plurality of nonvolatile storage devices 4A and 4B based on data related to usage statuses of the plurality of nonvolatile storage devices 4A and 4B in the ECU 2C, and selects one nonvolatile storage device from among the plurality of nonvolatile storage devices 4A and 4B as a recording destination of the pieces of data of the plurality of processors 3A and 3B in the ECU 2C based on the computed remaining lifetimes of the plurality of nonvolatile storage devices 4A and 4B.

Each of the plurality of processors 3A and 3B in the ECU 2C is configured to be able to record the acquired data in one nonvolatile storage device selected by the usage status monitoring unit 5.

The usage status monitoring unit 5 manages the remaining lifetimes of the nonvolatile storage devices 4A and 4B computed based on the data related to the usage statuses of the nonvolatile storage devices 4A and 4B in the ECU 2C and data stored in each of the nonvolatile storage devices 4A and 4B. The same data as in the first embodiment can be used as the data related to the usage statuses of the nonvolatile storage devices 4A and 4B in the ECU 2C.

As the usage status monitoring unit 5, for example, an ECU other than the ECU 2C or a computer can be used. Although the usage status monitoring unit 5 is illustrated as being separate from the two processors 3A and 3B in FIG. 6, the usage status monitoring unit 5 may be stored as a program executed by any one of the two processors 3A and 3B in the nonvolatile storage device (4A or 4B) paired with the corresponding processor. That is, any one of the plurality of processors 3A and 3B in the ECU 2C may function as the usage status monitoring unit 5. Further, the usage status monitoring unit 5 may be an interface or a communication device for inputting necessary data (that is, the remaining lifetimes of the nonvolatile storage devices 4A and 4B and contents of the stored data) from the outside.

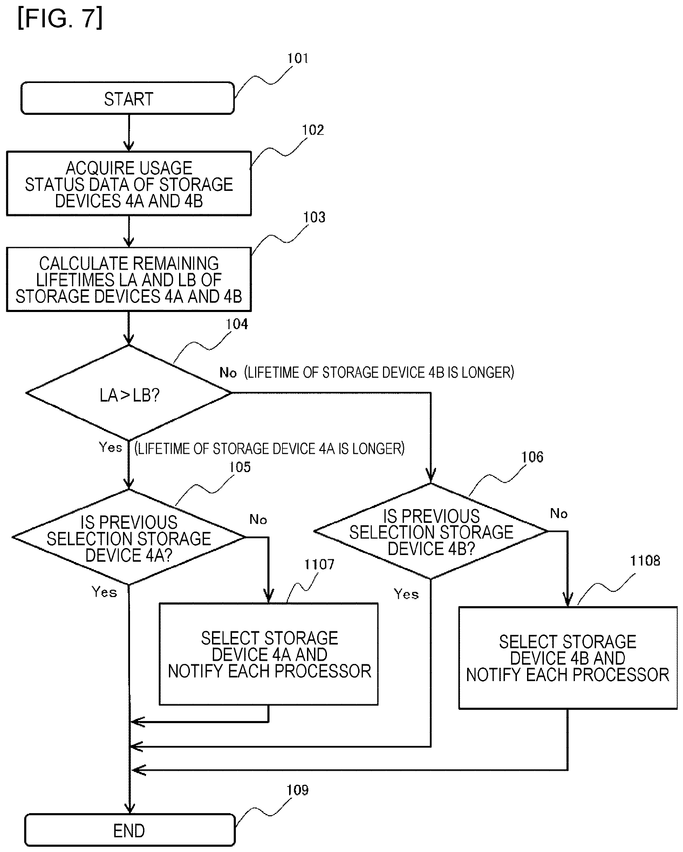

FIG. 7 is a flowchart illustrating an example of a procedure of switching processing for the nonvolatile storage devices 4A and 4B that are data storage destinations by the usage status monitoring unit 5 according to the third embodiment of the present invention. Addition of steps 1107 and 1108 is different from FIG. 2, and other steps are the same as those in FIG. 2. Hereinafter, description of the same steps as those in FIG. 2 will be appropriately omitted, and description of steps 1107 and 1108 will be mainly made.

In a case where it is determined in step 105 that the previous selection is the nonvolatile storage device 4B, the usage status monitoring unit 5 selects the nonvolatile storage device 4A in step 1107, notifies each of the processors 3A and 3B in the ECU 2C of the selection of the nonvolatile storage device 4A, and ends the flow (step 109).

In addition, in a case where it is determined in step 106 that the previous selection is the nonvolatile storage device 4A, the usage status monitoring unit 5 selects the nonvolatile storage device 4B in step 1108, notifies each of the processors 3A and 3B in the ECU 2C of the selection of the nonvolatile storage device 4B, and ends the flow (step 109).

As a "predetermined timing" for starting the flow of FIG. 7 or a "predetermined timing" for selecting one nonvolatile storage device in the flow of FIG. 7, the same timing as that of the first embodiment can be selected.

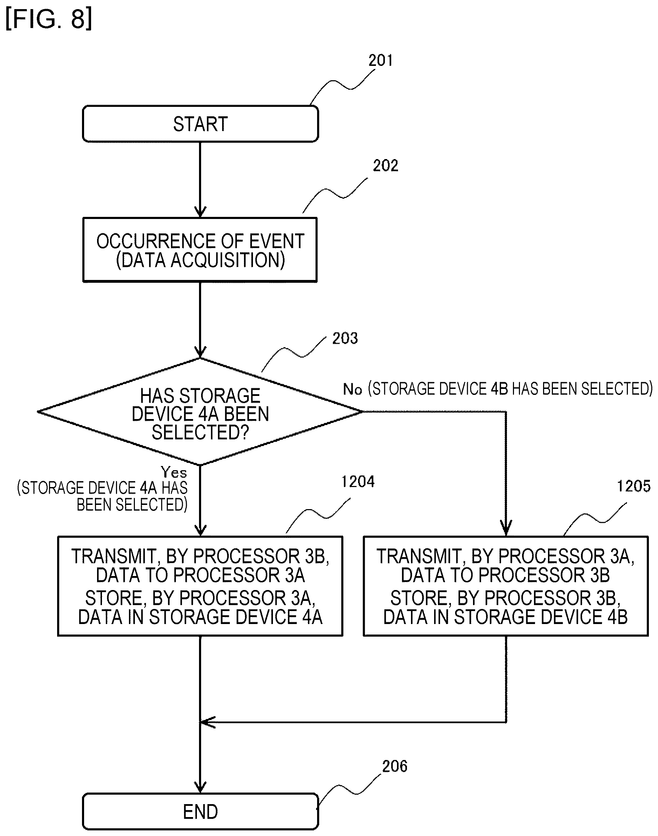

FIG. 8 is a flowchart illustrating an example of a procedure for storing data in the nonvolatile storage devices 4A and 4B by the processors 3A and 3B according to the third embodiment of the present invention. Steps 1204 and 1205 are added instead of steps 204 and 205 in FIG. 3, and other steps are the same as those in FIG. 3. Hereinafter, description of the same steps as those in FIG. 3 will be appropriately omitted, and description of steps 1204 and 1205 will be mainly made.

In step 1204, the processor 3B transmits EDR data and DSSAD data acquired and processed by the processor 3B to the processor 3A. The processor 3A stores EDR data and DSSAD data acquired and processed by the processor 3A and the data transmitted from the processor 3B in the nonvolatile storage device 4A, and ends the processing (step 206). That is, in step 1204, the data acquired by the remaining processor 3B after excluding the processor 3A from the plurality of processors 3A and 3B is transmitted to the processor 3A paired with the selected one nonvolatile storage device 4A, and the data acquired by the processor 3A and the data transmitted from the remaining processor 3B are recorded in one nonvolatile storage device 4A. As a result, all the pieces of data acquired by the plurality of processors 3A and 3B in the ECU 2C are recorded in one nonvolatile storage device 4A.

In step 1205, the processor 3A transmits the EDR data and the DSSAD data acquired and processed by the processor 3A to the processor 3B. The processor 3B stores the EDR data and the DSSAD data acquired and processed by the processor 3B and the data transmitted from the processor 3A in the nonvolatile storage device 4B, and ends the processing (step 206). That is, in step 1205, the data acquired by the remaining processor 3A after excluding the processor 3B from the plurality of processors 3A and 3B is transmitted to the processor 3B paired with the selected one nonvolatile storage device 4B, and the data acquired by the processor 3B and the data transmitted from the remaining processor 3A are recorded in one nonvolatile storage device 4B. As a result, all the pieces of data acquired by the plurality of processors 3A and 3B in the ECU 2C are recorded in one nonvolatile storage device 4B.

As described above, in the present embodiment, a plurality of pairs of processors 3A and 3B and nonvolatile storage devices 4A and 4B are provided in the ECU 2C, the remaining lifetimes of the nonvolatile storage devices 4A and 4B are computed, and the pieces of data acquired by the plurality of processors 3A and 3B in the ECU 2C are stored in one nonvolatile storage device (4A or 4B) selected based on the remaining lifetimes. Even in a case where the ECU 2C is configured in this manner, uneven data storage between the two nonvolatile storage devices 4A and 4B is suppressed, and the remaining lifetimes of the respective storage devices 4A and 4B are equalized. As a result, the lifetime of the system can be extended. In particular, also in the present embodiment, similarly to the first embodiment, one nonvolatile storage device selected by the usage status monitoring unit 5 has the longest remaining lifetime among the plurality of nonvolatile storage devices 4A and 4B in the ECU 2C, and it is thus possible to further extend the lifetime of the system.

In steps 1204 and 1205 of FIG. 8, a predetermined condition may be set for the data to be transmitted similarly to the second embodiment, and only some pieces of data satisfying the predetermined condition may be transmitted to a target processor (3A or 3B). That is, in the ECU 2C, the remaining processor after excluding one processor connected to one nonvolatile storage device selected by the usage status monitoring unit 5 from the plurality of processors in the ECU 2C may transmit, to the one nonvolatile storage device, some pieces of data satisfying the predetermined condition among pieces of data acquired by the remaining processor, and the first processor may record, in the one nonvolatile storage device, the data acquired by the first processor and the some pieces of data transmitted from the remaining processor.

Further, the ECU 2C of FIG. 6 includes two processors 3A and 3B and two nonvolatile storage devices 4A and 4B. However, three or more processors and three or more nonvolatile storage devices may be included.

The present invention is not limited to the above-described embodiments, and includes various modifications within the scope not departing from the gist thereof. For example, the present invention is not limited to one including the entire configuration described in the above embodiments, and includes one in which a part of the configuration is deleted. Further, a part of a configuration according to an embodiment can be added to or replaced with a configuration according to another embodiment.

In addition, each configuration related to the ECU, functions of each configuration, execution processing, and the like may be partially or entirely implemented by hardware (for example, a logic for executing each function is designed by an integrated circuit). In addition, the configuration related to the ECU may be a program (software) in which each function related to the configuration of the ECU is implemented by being read and executed by a processor (for example, a central processing unit (CPU)). Information related to the program can be stored in, for example, a semiconductor memory (such as a flash memory or a solid state drive (SSD)), a magnetic storage device (such as a hard disk drive), or a recording medium (such as a magnetic disk or an optical disk).

In the above description of each embodiment, the control lines and the information lines are understood to be necessary for the description of the embodiment. However, the control lines and the information lines do not necessarily indicate all the control lines and the information lines related to the product. In practice, it may be considered that almost all the configurations are connected to each other.

Reference Signs List

    1 control system
    2A electronic control unit (ECU)
    2B electronic control unit (ECU)
    3A processor (first processor)
    3B processor (second processor)
    4A nonvolatile storage device (first nonvolatile storage device)
    4B nonvolatile storage device (second nonvolatile storage device)
    5 usage status monitoring unit
    6A sensor (first sensor)
    6B sensor (second sensor)
    100 control system

**Claims**

1.    A data recording method of a control system including a plurality of electronic control units each including at least one of a plurality of processors and at least one of a plurality of nonvolatile storage devices, the data recording method comprising:

    computing remaining lifetimes of the plurality of nonvolatile storage devices based on data related to usage statuses of the plurality of nonvolatile storage devices;
    selecting one nonvolatile storage device from among the plurality of nonvolatile storage devices based on the computed remaining lifetimes of the plurality of nonvolatile storage devices; and
    recording pieces of data acquired by the plurality of electronic control units in the selected one nonvolatile storage device.

2.    The data recording method of the control system according to claim 1, wherein the data related to the usage statuses includes at least one of a cumulative write amount of each of the plurality of nonvolatile storage devices and the cumulative number of write operations of each of the plurality of nonvolatile storage devices.

3. The data recording method of the control system according to claim 2, wherein the data related to the usage statuses further includes at least one of temperature data of the plurality of electronic control units and data regarding alternative sectors in the plurality of nonvolatile storage devices.

4. The data recording method of the control system according to claim 1, wherein the one nonvolatile storage device is a nonvolatile storage device having a longest computed remaining lifetime among the plurality of nonvolatile storage devices.

5. The data recording method of the control system according to claim 1, wherein the selection of the one nonvolatile storage device is performed at a predetermined timing.

6. The data recording method of the control system according to claim 5, wherein the predetermined timing is a timing at which an ignition of a vehicle on which the control system is mounted is turned on.

7. The data recording method of the control system according to claim 1, wherein
the recording of the pieces of data acquired by the plurality of electronic control units in the selected one nonvolatile storage device includes:

transmitting, to a first electronic control unit on which the one nonvolatile storage device is mounted, the data acquired by a remaining electronic control unit after excluding the first electronic control unit from the plurality of electronic control units; and
recording the data acquired by the first electronic control unit and the data transmitted from the remaining electronic control unit in the one nonvolatile storage device.

8. The data recording method of the control system according to claim 7, wherein

some pieces of data satisfying a predetermined condition among pieces of data acquired by the remaining electronic control unit are transmitted to the first electronic control unit, and
the data acquired by the first electronic control unit and the some pieces of data transmitted from the remaining electronic control unit are recorded in the one nonvolatile storage device.

9. An electronic control unit comprising:

a plurality of processors that are configured to communicate with each other and each acquire data; and
a plurality of nonvolatile storage devices in which the pieces of data acquired by the plurality of processors are recorded, wherein
the electronic control unit comprises a usage status monitoring unit that computes remaining lifetimes of the plurality of nonvolatile storage devices based on data related to usage statuses of the plurality of nonvolatile storage devices, and selects one nonvolatile storage device from among the plurality of nonvolatile storage devices based on the computed remaining lifetimes of the plurality of nonvolatile storage devices, and
each of the plurality of processors records the acquired data in the one nonvolatile storage device selected by the usage status monitoring unit.

10. The electronic control unit according to claim 9, wherein the data related to the usage statuses includes at least one of a cumulative write amount of each of the plurality of nonvolatile storage devices and the cumulative number of write operations of each of the plurality of nonvolatile storage devices.

11. The electronic control unit according to claim 10, wherein the data related to the usage statuses further includes at least one of temperature data of the electronic control units and data regarding alternative sectors in the plurality of nonvolatile storage devices.

12. The electronic control unit according to claim 9, wherein the one nonvolatile storage device is a nonvolatile storage device having a longest computed remaining lifetime among the plurality of nonvolatile storage devices.

13. The electronic control unit according to claim 9, wherein the selection of the one nonvolatile storage device is performed at a predetermined timing.

14. The electronic control unit according to claim 13, wherein the predetermined timing is a timing at which an ignition of a vehicle on which the electronic control unit is mounted is turned on.

15. The electronic control unit according to claim 9, wherein

the remaining processor after excluding a first processor connected to the one nonvolatile storage device from the plurality of processors transmits, to the one nonvolatile storage device, some pieces of data satisfying a predetermined condition among pieces of data acquired by the remaining processor, and
the first processor records, in the one nonvolatile storage device, the data acquired by the first processor and the some pieces of data transmitted from the remaining processor.

[FIG. 1]

CONTROL SYSTEM 1

FIRST ECU 2A

PROCESSOR 3A

SENSOR 6A

NONVOLATILE STORAGE DEVICE 4A

SECOND ECU 2B

PROCESSOR 3B

SENSOR 6B

NONVOLATILE STORAGE DEVICE 4B

USAGE STATUS MONITORING UNIT 5

[FIG. 2]

```
                                              101
                  ┌──────────────────────┐
                  │        START         │
                  └──────────────────────┘
                              │
                              ▼            102
                  ┌──────────────────────┐
                  │    ACQUIRE USAGE     │
                  │ STATUS DATA OF STORAGE│
                  │  DEVICES 4A AND 4B   │
                  └──────────────────────┘
                              │
                              ▼            103
                  ┌──────────────────────┐
                  │  CALCULATE REMAINING │
                  │ LIFETIMES LA AND LB OF│
                  │ STORAGE DEVICES 4A AND 4B│
                  └──────────────────────┘
                              │
                              ▼      104
```

$LA > LB?$    No (LIFETIME OF STORAGE DEVICE 4B IS LONGER)

Yes (LIFETIME OF STORAGE DEVICE 4A IS LONGER)

105
IS PREVIOUS SELECTION STORAGE DEVICE 4A?    No

106
IS PREVIOUS SELECTION STORAGE DEVICE 4B?    No

Yes

Yes

107
SELECT STORAGE DEVICE 4A AND NOTIFY EACH ECU

108
SELECT STORAGE DEVICE 4B AND NOTIFY EACH ECU

109
┌──────────────────────┐
│         END          │
└──────────────────────┘

[FIG. 3]

START  `201`

↓

OCCURRENCE OF EVENT
(DATA ACQUISITION)  `202`

↓

HAS STORAGE
DEVICE 4A BEEN
SELECTED?  `203`

No (STORAGE DEVICE 4B HAS BEEN SELECTED)

Yes
(STORAGE DEVICE 4A HAS
BEEN SELECTED)

TRANSMIT, BY ECU 2B,
DATA TO ECU 2A
STORE, BY ECU 2A,
DATA IN STORAGE DEVICE 4A  `204`

TRANSMIT, BY ECU 2A,
DATA TO ECU 2B
STORE, BY ECU 2B,
DATA IN STORAGE DEVICE 4B  `205`

END  `206`

[FIG. 4]

TOTAL DATA AMOUNT          〈RELATED ART〉

(a)

| EDR4 700MB |
| EDR3 700MB |
| EDR2 700MB |
| EDR1 700MB |

| EDR4 300MB |
| EDR3 300MB |
| EDR2 300MB |
| EDR1 300MB |

NONVOLATILE STORAGE DEVICE 4A          NONVOLATILE STORAGE DEVICE 4B

TOTAL DATA AMOUNT          〈FIRST EMBODIMENT〉

(b)

| EDR3 1GB | EDR4 1GB |
| EDR1 1GB | EDR2 1GB |

NONVOLATILE STORAGE DEVICE 4A          NONVOLATILE STORAGE DEVICE 4B

[FIG. 5]

201

START

202

OCCURRENCE OF EVENT
(DATA ACQUISITION)

203

HAS STORAGE
DEVICE 4A BEEN
SELECTED?

No (STORAGE DEVICE 4B HAS BEEN SELECTED)

Yes
(STORAGE DEVICE 4A HAS
BEEN SELECTED)

204A

205A

TRANSMIT, BY ECU 2B,
DATA SATISFYING CONDITION
TO ECU 2A

STORE, BY ECU 2A,
DATA IN STORAGE DEVICE 4A

STORE, BY ECU 2B,
DATA IN STORAGE DEVICE 4B

TRANSMIT, BY ECU 2A,
DATA SATISFYING CONDITION
TO ECU 2B

STORE, BY ECU 2B,
DATA IN STORAGE DEVICE 4B

STORE, BY ECU 2A,
DATA IN STORAGE DEVICE 4A

206

END

[FIG. 6]

CONTROL SYSTEM

100

ECU
2C

6A

SENSOR

6B

SENSOR

ECU4

FIRST
PROCESSOR

SECOND
PROCESSOR

ECU5

2D

3A

3B

2E

FIRST
NONVOLATILE
STORAGE DEVICE

SECOND
NONVOLATILE
STORAGE DEVICE

4A

4B

USAGE STATUS MONITORING UNIT

5

[FIG. 7]

START _101_

ACQUIRE USAGE STATUS DATA OF STORAGE DEVICES 4A AND 4B _102_

CALCULATE REMAINING LIFETIMES LA AND LB OF STORAGE DEVICES 4A AND 4B _103_

LA > LB? _104_

No (LIFETIME OF STORAGE DEVICE 4B IS LONGER)

Yes (LIFETIME OF STORAGE DEVICE 4A IS LONGER)

IS PREVIOUS SELECTION STORAGE DEVICE 4A? _105_

No

Yes

IS PREVIOUS SELECTION STORAGE DEVICE 4B? _106_

No

Yes

SELECT STORAGE DEVICE 4A AND NOTIFY EACH PROCESSOR _1107_

SELECT STORAGE DEVICE 4B AND NOTIFY EACH PROCESSOR _1108_

END _109_

[FIG. 8]

```
                    201
              ┌──────────────┐
              │    START     │
              └──────┬───────┘
                     │               202
              ┌──────▼───────┐
              │ OCCURRENCE OF EVENT │
              │ (DATA ACQUISITION)  │
              └──────┬───────┘
                     │                  203
                  ◇──────◇
                 ◇  HAS STORAGE  ◇    No (STORAGE DEVICE 4B HAS BEEN SELECTED)
                 ◇  DEVICE 4A BEEN ◇─────────────────┐
                 ◇   SELECTED?    ◇                  │
                  ◇──────◇                           │
            Yes     │                                │
   (STORAGE DEVICE 4A HAS                            │
      BEEN SELECTED)                                 │
                    │        1204                    │        1205
         ┌──────────▼──────────┐          ┌──────────▼──────────┐
         │ TRANSMIT, BY PROCESSOR 3B, │   │ TRANSMIT, BY PROCESSOR 3A, │
         │ DATA TO PROCESSOR 3A       │   │ DATA TO PROCESSOR 3B       │
         │ STORE, BY PROCESSOR 3A,    │   │ STORE, BY PROCESSOR 3B,    │
         │ DATA IN STORAGE DEVICE 4A  │   │ DATA IN STORAGE DEVICE 4B  │
         └──────────┬──────────┘          └──────────┬──────────┘
                    │◄───────────────────────────────┘
                    │            206
         ┌──────────▼──────────┐
         │        END          │
         └─────────────────────┘
```

**EP 4 745 748 A1**

<table>
<tr><td colspan="3">INTERNATIONAL SEARCH REPORT</td><td>International application No.<br><br>**PCT/JP2023/026129**</td></tr>
</table>

**A.   CLASSIFICATION OF SUBJECT MATTER**

*G06F 3/06*(2006.01)i
FI:   G06F3/06 306Z

According to International Patent Classification (IPC) or to both national classification and IPC

**B.   FIELDS SEARCHED**

Minimum documentation searched (classification system followed by classification symbols)

G06F3/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| Y | WO 2008/035766 A1 (AUTONETWORKS TECHNOLOGIES LTD. et al.) 27 March 2008 (2008-03-27)<br>      paragraphs [0044]-[0058], fig. 1-3 | 1-15 |
| Y | JP 2017-199043 A (NEC CORPORATION) 02 November 2017 (2017-11-02)<br>      paragraphs [0020]-[0021], [0038] | 1-15 |
| Y | JP 2018-73038 A (TOSHIBA MEMORY CORP.) 10 May 2018 (2018-05-10)<br>      paragraphs [0031]-[0037] | 1-15 |
| Y | JP 2021-174020 A (RICOH COMPANY, LTD.) 01 November 2021 (2021-11-01)<br>      paragraphs [0014]-[0017] | 3, 11 |
| Y | JP 2018-169980 A (NEC CORPORATION) 01 November 2018 (2018-11-01)<br>      paragraph [0021] | 3, 11 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 August 2023** | **05 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
**Information on patent family members**

International application No.

**PCT/JP2023/026129**

| Patent document cited in search report | Publication date (day/month/year) | Patent family member(s) | Publication date (day/month/year) |
|---|---|---|---|
| WO 2008/035766 A1 | 27 March 2008 | US 2009/0262000 A1 paragraphs [0059]-[0075], fig. 1-3 | |
| JP 2017-199043 A | 02 November 2017 | WO 2016/013202 A1 paragraphs [0020]-[0021], [0038]-[0042] | |
| JP 2018-73038 A | 10 May 2018 | US 2018/0121136 A1 paragraphs [0052]-[0058] | |
| JP 2021-174020 A | 01 November 2021 | (Family: none) | |
| JP 2018-169980 A | 01 November 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013084284 A